# EUROPEAN PATENT APPLICATION

(11) **EP 2 510 995 A1**
(43) Date of publication of application: **17.10.2012**
(21) Application number: 12002595.2
(22) Date of filing: 12.04.2012
(51) Int. Cl.: B01D 46/00, B01D 46/42, F24C 15/20

(54) **Filter for extractor hoods**

(30) Priority: 13.04.2011 IT AN20110048
(71) Applicant: SIFIM S.r.l., 60035 Jesi (AN) (IT)
(72) Inventor: Pelagagge, Luca, 60020 Falconara Marittima AN (IT)
(74) Representative: Cacciamani, Clizia

(57) **Abstract**

Filter for extractor hoods, comprising a frame-shaped chassis surrounding said filter, means for closing the active section of said filter which are operatively coupled to said filter and movable perpendicularly with respect to the lying plane thereof, means for actuating and adjusting the closing means; the position of said closing means being adjustable as desired from a fully open position to a fully closed position by said actuating/adjusting means, said closing occurring between the periphery of said closing means and said frame-shaped chassis.

## Description

The present invention relates to a filter for extraction hoods which is provided with means for closing the suction area thereof.

Today, the closing means provide that the filter or the whole filter unit is moved vertically so as to have a flat, continuous surface when the hood is not working.

However, this does not guarantee a perfect seal between the components, leaving room for air leaks.

Furthermore, the solutions so far proposed and known in the art are discrete solutions, in other words, they allow only for one open position and one closed position of the filter; consequently, the filter cannot be partially closed in order to change the suction area.

This results in an increased power consumption and high levels of noise even when a reduced air flow is being processed and the filter is not working at its full capacity.

Moreover, the provision of the closing means usually makes the filter difficult to be removed and then its maintenance or replacement operations difficult to be performed.

Therefore, a primary aim of the present invention is to provide closing means movable between a closed position and a fully open position of the filter in order to adjust the intake section thereof.

Another aim of the present invention is to have the ability of partitioning the suction area of the hood filter in order to reduce the power consumption and noise levels when a reduced air flow is required to be processed.

A further aim of the present invention is to provide a filter equipped with closing means and removable from its seat in the extractor hood, thus allowing for a comfortable maintenance or replacement thereof.

Accordingly, an object of the present invention is a filter for extractor hoods, comprising a frame-shaped chassis surrounding said filter, means for closing the active section of said filter which are operatively coupled to said filter and movable perpendicularly with respect to the lying plane thereof, means for actuating and adjusting the closing means; the position of said closing means being adjustable as desired from a fully open position to a fully closed position by said actuating/adjusting means, said closing occurring between the periphery of said closing means and said frame-shaped chassis.

Another object of the present invention is a filter of the above-described type which is removably received in the opening of a conduit of an extractor hood, means being provided for releasable coupling with the structure of said hood, said coupling means being operable by said actuating/adjusting means of the closing means.

A further object of the present invention is to provide a filter with fastening sites for the mounting thereof which are dimensioned and arranged in exactly a similar manner to those existing on the commercially available filters, thus allowing said filter to be mounted to both current commercially available hoods and existing, already installed hoods.

Furthermore, in the case of hoods having more filter units arranged sequentially one after the other, the filter according to the present invention allows to provide suction only at the working cooking, thus achieving an energy saving by opening or closing said filter.

In a first embodiment, said actuating/adjusting means of the closing means comprise linear slide means which are arranged on said closing means and provided with gripping means to cooperate with guide means connected to said filter. Specifically, said guide means comprise cam guide means formed on a plane perpendicular to the plane of both said closing means and said filter, and parallel to the plane of movement of said linear slide means.

In another embodiment, said actuating/adjusting means of the closing means comprise rotating means which are arranged on said closing means and rotatable with respect to an axis perpendicular to the plane of said closing means to cooperate with guide means connected to said filter. Specifically, said guide means comprise cam guide means formed on a cylindrical surface axially projecting from said filter.

These and other features of the invention, and the advantages derived therefrom, will become apparent from the following detailed description of a preferred embodiment thereof, given by way of a non-limiting example, with reference to the accompanying drawings in which:
Fig. 1 is a cross-sectional view of the filter for extractor hoods with the means for closing the intake section according to the present invention in the configuration in which the filter is released from the hood;
Fig. 2 is a cross-sectional view of the embodiment of the system shown in Figure 1 in a closed configuration;
Fig. 3 is a cross-sectional view of the embodiment of the system shown in Figure 1 in the fully open configuration;
Fig. 4 is a cross-sectional view of a second embodiment of the filter for extractor hoods with the means for closing the intake section according to the present invention in the configuration in which the filter is fastened to the hood;
Fig. 5 is a cross-sectional view of the embodiment of the system shown in Figure 4 in a configuration in which the filter is released from the hood;
Fig. 6 is a cross-sectional view of the embodiment of the system shown in Figure 4 in a closed configuration;
Fig. 7 is a cross-sectional view of the embodiment of the system shown in Figure 4 in an open configuration;
Fig. 8 is a cross-sectional view of the embodiment of the system shown in Figure 4 in the closed configuration with the gripping means extended;
Fig. 9 is a cross-sectional view of the embodiment of the system shown in Figure 4 in the closed configuration with the gripping means retracted,
Fig. 10 is a cross-sectional view of the means for locking the rotation of the gripping means of the embodiment of the system shown in Figure 4;
Fig. 11 is a cross-sectional view of the means for locking the rotation of the gripping means shown in Fig. 10 in the rest position;
Fig. 12 is a cross-sectional view of the means for locking the rotation of the gripping means shown in Fig. 10 in a working position.

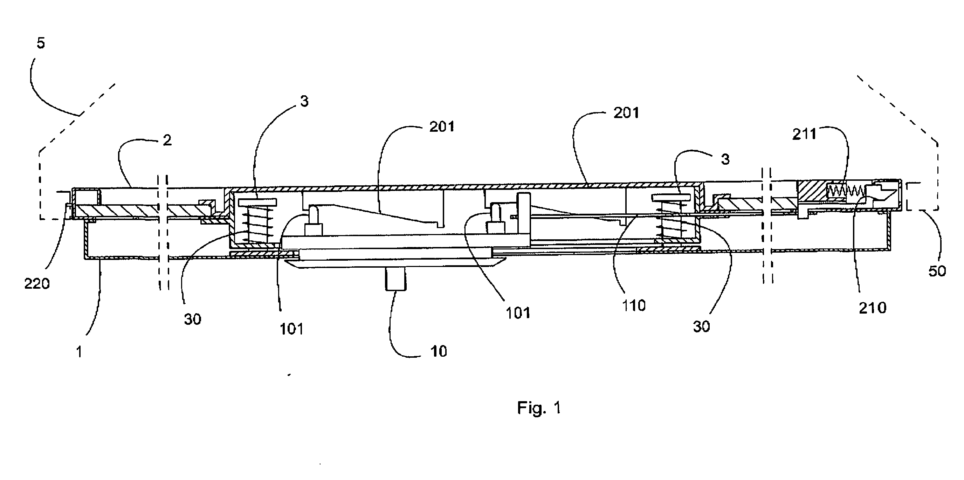

Figure 1 shows a cross-section of the filter for extractor hoods with the means for closing the intake section according to the present invention in the configuration in which the filter is released from the hood 5. The filter 2 is coupled with the closing means 1 which are arranged opposite to the suction section of the filter 1. Additionally, the filter 2 includes a substantially box-shaped recess 200 which accommodates cam guide means 201 and members 3; wherein said members 3 are received in passage holes to slide perpendicularly with respect to the lying plane of the filter 2. In fact, the closing means 1 comprises at least two members 3 provided with springs 30; wherein said members 3, due to the action of the springs 30, move the closing means 1 towards the filter 2 in order to bring the two components together.

The closing means 1 comprises a gripping means 10 which allows the suction section of the filter 2 to be adjusted. Said gripping means 10 is slidably received into a slot acting as a guide for the movement of the gripping means 10, thus allowing the filter to be adjustably opened or closed. In fact, the knob 10 comprises at least two members 101 abutting against the cam guide means 201 which are arranged inside the recess 200 of the filter 2.

Said cam guide means 201 are formed on a plane perpendicular to the plane of both said closing means and said filter and parallel to the plane of movement of said linear slide means, said cam guide means having a shape characterized by a straight portion parallel to the lying plane of the filter 2, and a straight portion tilted with respect to said lying plane of the filter 2. This shape serves as a contact surface with the members 101 of the gripping means 10. The straight portion parallel to the lying plane of the filter 2 of said cam guide means 201 allows the gripping means 10 to be moved through an extra travel in order to release and remove the filter 2 from the hood 5. In fact, at least one of the sides of the filter has at least one member 210 against which at least one spring 211 is urged.

Said spring 211 pushes the member 210 outwardly with respect to the peripheral frame of the filter 2 until said member enters the hollow 50 formed in the hood 5. Therefore, when the gripping means 10 are moved through the extra travel, the member 110 integral with said gripping means 10 retracts the member 210 inwardly with respect to the peripheral frame of the filter 2 so that the member 210 leaves the hollow 50 of the hood 5 and allows the filter 2 to be released At the side opposite to the side of the peripheral frame of the filter 2 comprising the member 210, there is at least one fixed pin 220 mating with holes arranged on the hood 5. Said pin 220 acts as a support and allows the filter 2 to be secured to the hood 5.

During the removal of the filter 2, the pin 220 acts as a hinge and allows said filter 2 to be rotated with respect to the hood 5 in order to remove it. Thus, the filter 2 is easy and quick to be released, and the maintenance operations on said filter 2, such as the replacement or washing thereof in a dishwasher, are therefore simplified

Furthermore, the fastening sites for the mounting of said filter 2 are dimensioned and arranged in exactly a similar manner to those existing on the commercially available filters, thus allowing said filter 2 to be mounted to both current commercially available hoods and existing, already installed hoods.

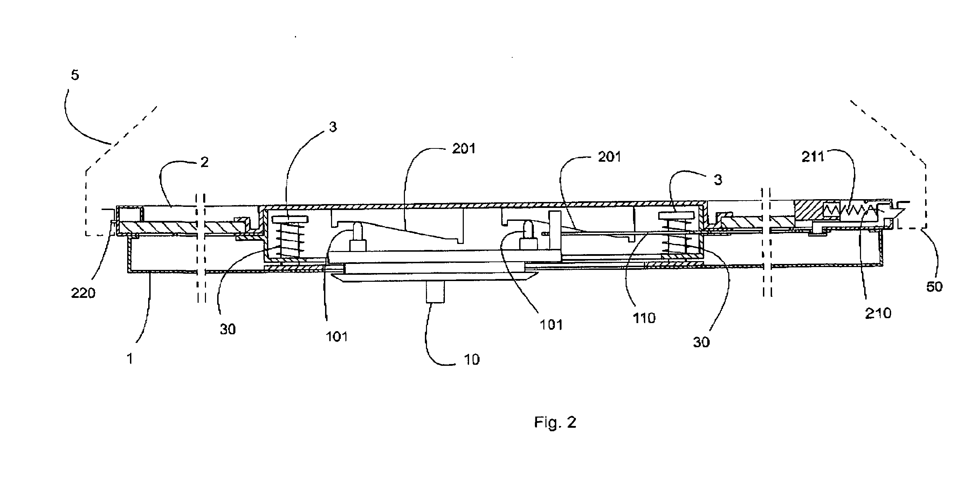

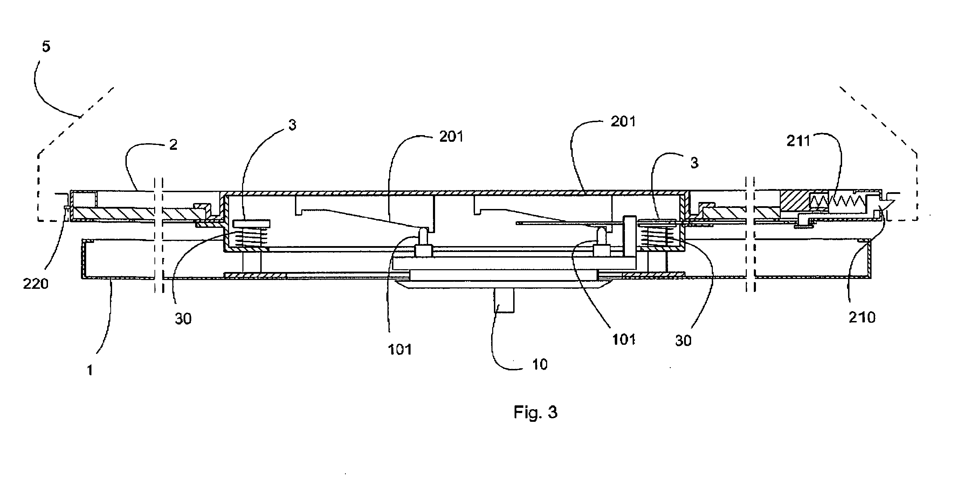

Fig. 2 is a cross-sectional view of the filter for extractor hoods with the means for closing the intake section according to the present invention in a closed configuration. Fig. 3 is a cross-sectional view of the embodiment of the system shown in Figure 1 in the fully open configuration.

Assuming that like elements are referred to by like reference numerals, from a comparison of Fig. 2 and Fig. 3, it can be seen that, when the gripping means 10 is moved to the left, the members 101 are guided by the cam guide means 201 through a displacement which causes the closing means 1 to be lowered perpendicularly to the lying plane of the filter 2.

In fact, when these members 101 are moved along the straight portion of the cam guide means 201 which is tilted with respect to said lying plane of the filter 2, the closing means 1 is moved perpendicularly with respect to the lying plane of the filter 2, and said movement allows the filter to be opened or closed according to the direction of displacement of the gripping means 10.

Referring to Fig. 2, if the gripping means 10 is moved toward the left side of the filter 2, the inlet section is opened, and if this movement is continued up to the stroke end position shown in Fig. 3, the inlet section reaches the fully open position and thus achieves the maximum suction area

Furthermore, from a comparison of Fig. 2 and Fig. 3, it can be observed that during the opening of the filter 2, and then during the downward movement of the closing means 1, the members 3 are slidably moved into passage holes perpendicularly with respect to the lying plane of the filter 2 in order to compress the springs 30. During the closing operation, said springs 30 are actually those that retract the closing means 1 toward the filter 2 by urging against the members 3 in order to reduce the suction area until the closed position.

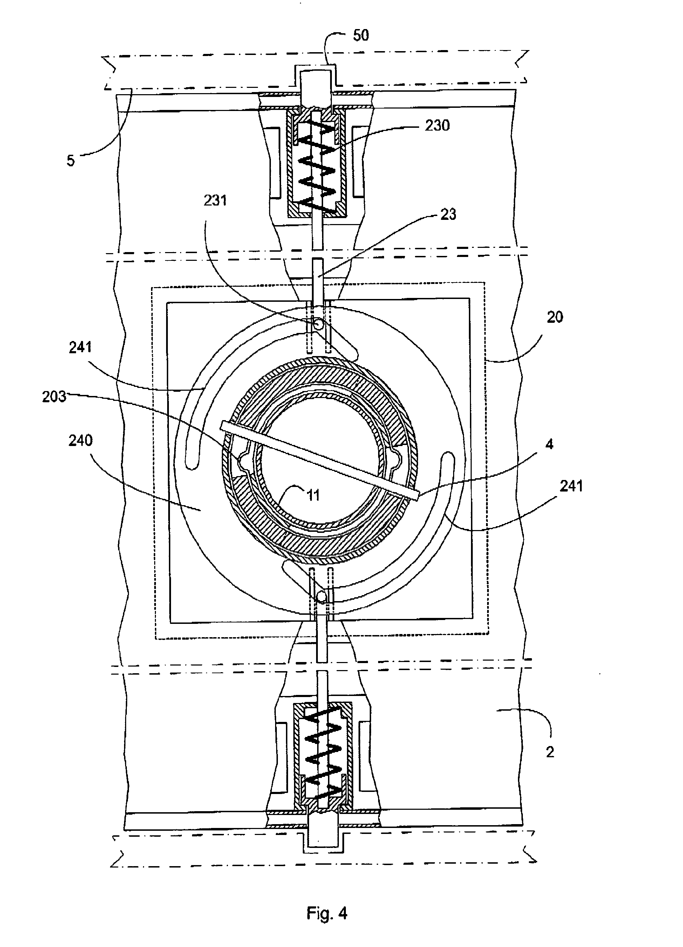

Fig. 4 is a cross-sectional view of a second embodiment of the filter for extractor hoods with the means for closing the intake section according to the present invention in the configuration in which the filter is fastened to the hood. Said second embodiment provides the use of actuating/adjusting means of the closing means which are different from those described in the first embodiment in that the adjustment and control of the opening occurs through the rotation of the gripping means about the axis of symmetry perpendicular to the lying plane of the filter 2. Assuming that like elements are referred to by like reference numerals, the Figure shows the box-shaped body 20 accommodating the flange 240 for releasing the filter 2, the support 203 for the closing means, the guide means 202, the gripping means 11 and the pin 4. Said pin 4 makes the gripping means 11 rotationally integral with the release flange 240. Said release flange 240 of the filter 2 is provided with at least one suitably shaped cam 241 in which the pin 231 of the member 23 is slidably received. Said cam 241 is shaped substantially as an arc of circumference with a straight extension tilted towards the centre of the flange 240 for releasing the filter 2.

Such a construction of the cam 241 allows the filter 2 to be kept secured to the hood 5 during the usual operational adjustments while allowing the filter 2 to be quickly removed if necessary. In fact, when the release flange 240 is rotated through the rotation of the gripping means 11, the pin 231 is moved towards the centre of said release flange 240, in such a way that the member 23 leaves the hollow 50 formed in the hood 5 in order to release the filter 2 from the hood 5. At least one spring 230 is urged against said member 23 to ensure that the filter 2 is secured to the hood 5.

The fastening sites for the mounting of said filter 2 are dimensioned and arranged in exactly a similar manner to those existing on the commercially available filters, thus allowing said filter 2 to be mounted to both current commercially available hoods and existing, already installed hoods.

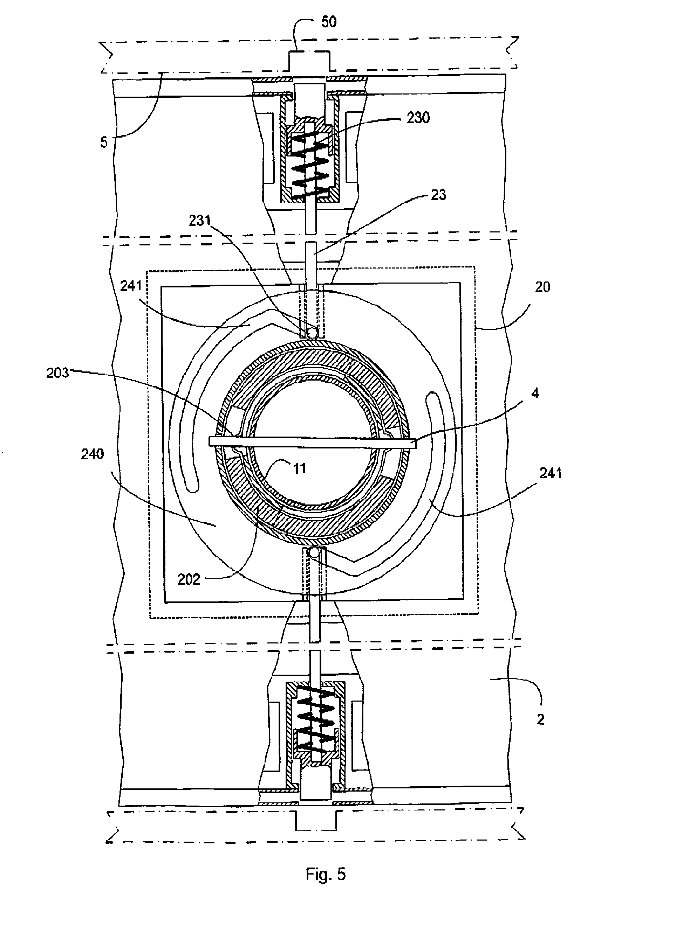

Fig. 5 is a cross-sectional view of the embodiment of the system shown in Figure 4 in a configuration in which the filter is released from the hood. In fact, it can be seen from the Figure that the members 23 are not coupled with the hollow 50 of the hood 5, thus allowing the filter 2 to be released from said hood 5.

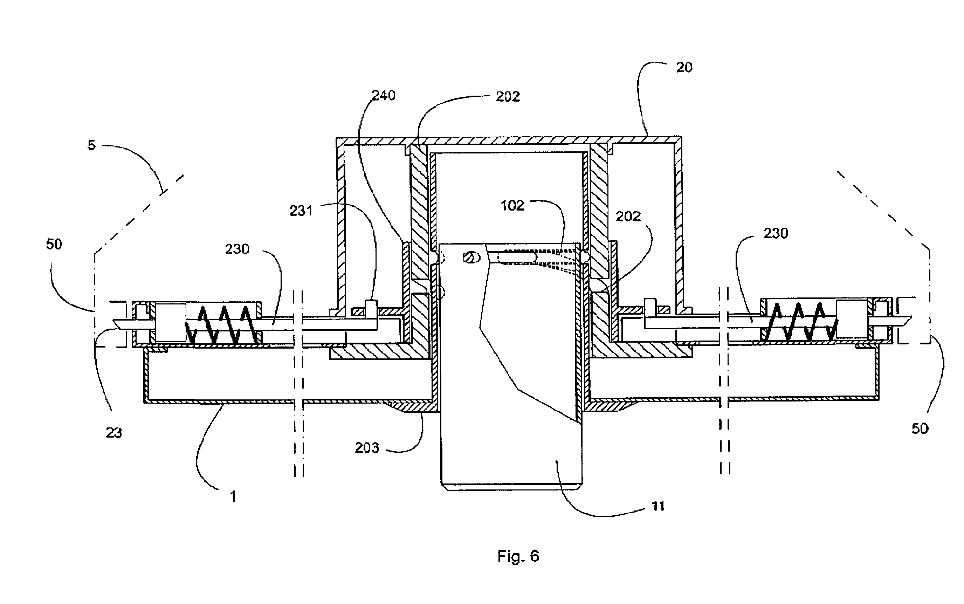

Fig. 6 is a cross-sectional view of the embodiment of the system shown in Figure 4 in a closed configuration. The guide means 202 have at least two cams 102 positioned each opposite to the other and suitably shaped to act as a guide for the actuating/adjusting means of the closing means 1. In fact, the pin 4 proceeds along the cam 102 to make the gripping means 11 rotationally integral with the support 203 of the closing means, thus allowing the filter 2 to be adjustably opened via the perpendicular displacement of the closing means 1 with respect to the lying plane of said filter 2.

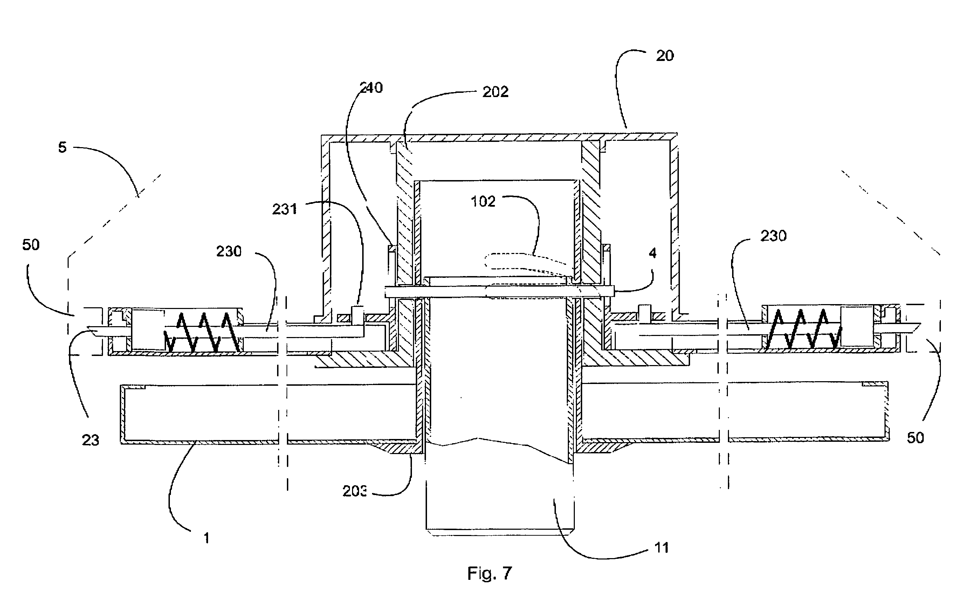

Fig. 7 is a cross-sectional view of the embodiment of the system shown in Figure 4 in an open configuration. From a comparison of Fig. 6 and Fig. 7, it can be seen that the closing means 1 are extremely quick and accurate to be controlled and adjusted, and the adjustment can be customized and adapted to any operational condition.

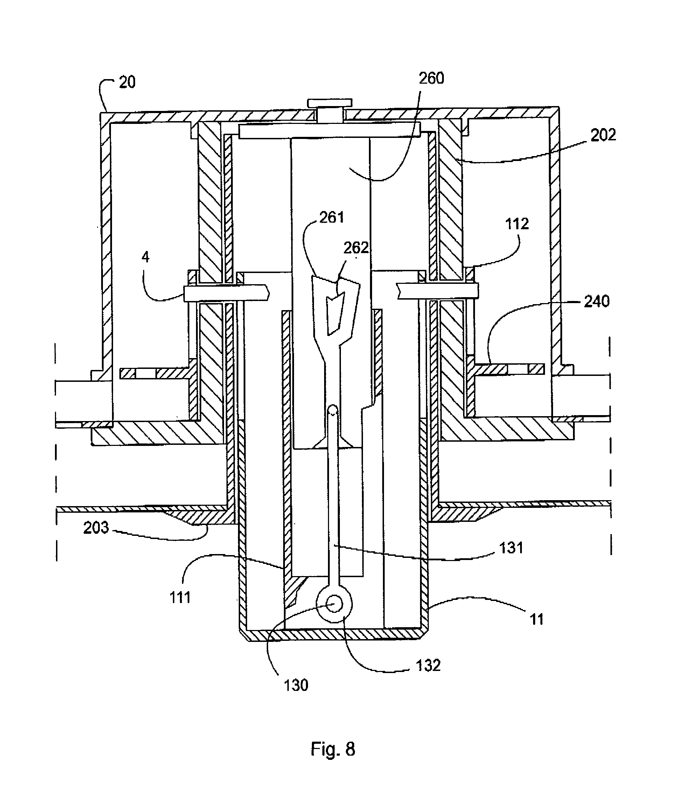

Fig. 8 is a cross-sectional view of the embodiment of the system shown in Figure 4 in the closed configuration with the gripping means extended. In fact, said embodiment according to the present invention provides that the gripping means 11 are retracted into the box-shaped body 20, particularly into the support means 203 of the closing means. Said support means 203 of the closing means are substantially hollow cylindrical members which accommodate the gripping means 11 therein. Said gripping means 11 are substantially cylindrical in shape and comprise at least two cams 112 which allow said gripping means 11 to be moved perpendicularly with respect to the lying plane of the filter 2. The gripping means 11 comprise the member 111 having at least one pin 130 and a recess 120 in which the member 260 is slidably received. Said member 260 is characterized by a recess 261 suitably shaped to accommodate a cam 262 and the member 131; wherein said member 131 has an eyelet 132 which can be coupled with the pin 130 so as to make the gripping means 11 integral with said member 131.

The operation of retracting the gripping means 11 is performed by pushing said gripping means 11 perpendicularly with respect to the lying plane of the filter 2 so as to accommodate them into the support means 203 of the closing means. The member 131 interacts with both the shape of the cam 262 and the shape of the recess 261 to be guided towards the locking position that allows to have a system with retractable gripping means 11.

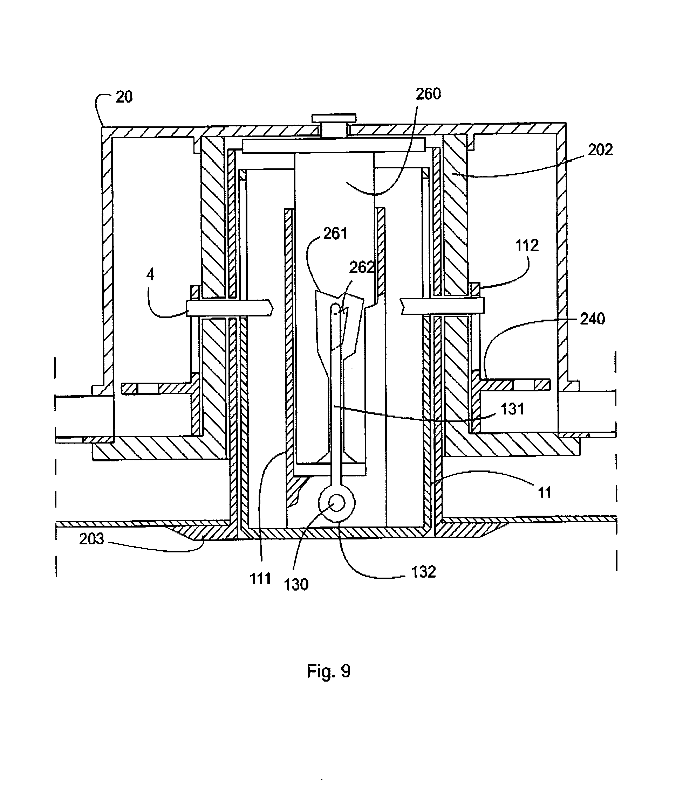

Fig. 9 is a cross-sectional view of the embodiment of the system shown in Figure 4 in the closed configuration with the gripping means retracted. If the gripping means 11 are desired to be retracted, it is sufficient to push said gripping means 11 perpendicularly with respect to the lying plane of the filter 2; in this case, the member 131 is released from the locking position and the gripping means 11 are moved back.

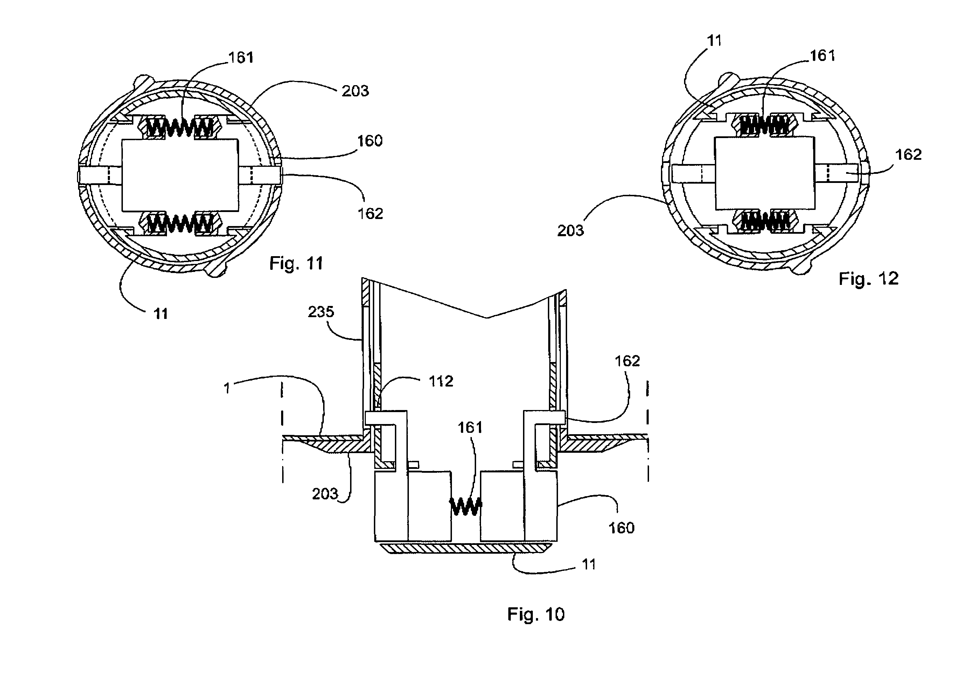

Fig. 10 shows a cross-sectional view of the means for locking the rotation of the gripping means of the embodiment of the system shown in Figure 4 in the rest position. This Figure illustrates the gripping means 11 which comprise at least one cam 113, at least one through-hole 112 and at least one actuating means 160 which can be moved perpendicularly with respect to the vertical axis of symmetry of said gripping means 11. A spring 161 is urged against said actuating means 160 to push it outwardly and ensure that the pin 162 of said actuating means 160 is received into the through-hole 112 of the gripping means 11. Said rotation-locking means prevent the knob to rotate when the driving means 160 are not activated while providing and allowing for a translational movement of the gripping means 11 perpendicularly with respect to the lying plane of the filter 2.

In fact, the support 203 of the closing means has at least one groove 235 located in correspondence of the pin 162 for receiving said pins 162 of the actuating means 160 and for guiding them through said translational movement of said gripping means 11; this allows the gripping means 11 to be retracted into the support 203 of the closing means.

Fig. 11 is a cross-sectional view of the means for locking the rotation of the gripping means shown in Fig. 10 in the rest position. This Figure shows that the gripping means 11 are prevented from rotating in the rest position. In fact, the pin 162 of the actuating means 160 are accommodated in the grooves 235 and pushed against said grooves 235 by the springs 161; this prevents the gripping means 11 to be rotated at all.

Fig. 12 is a cross-sectional view of the means for locking the rotation of the gripping means in which the pins 162 of the actuating means 160 have been retracted from the grooves 235. In said configuration, the gripping means 11 can be rotated in order to adjust and control the opening of the closing means 1 of the filter 2.

Therefore, the hood filter according to the present invention comprises closing means movable between a closed position and a fully open position of the filter in order to adjust the intake section thereof. This allows the suction area of the hood filter to be partitioned in order to reduce the power consumption and noise levels when a reduced air flow is required to be processed.

Moreover, said filter has fastening sites for the mounting thereof which are dimensioned and arranged in exactly a similar manner to those existing on the commercially available filters, thus allowing said filter to be mounted and adapted to both current commercially available hoods and existing, already installed hoods.

In the case of hoods having more filter units arranged sequentially one after the other, the filter according to the present invention allows to provide suction only at the working cooking zone in order to achieve an increased energy saving by opening or closing said filter.

## Claims

1. Filter for extractor hoods, comprising a frame-shaped chassis surrounding said filter, means for closing the active section of said filter which are operatively coupled to said filter and movable perpendicularly with respect to the lying plane thereof, means for actuating and adjusting the closing means; the position of said closing means being adjustable as desired from a fully open position to a fully closed position by said actuating/adjusting means, said closing occurring between the periphery of said closing means and said frame-shaped chassis.

2. Filter according to claim 1, wherein said filter is removably received in the opening of a conduit of an extractor hood, means being provided for releasable coupling with the structure of said hood, said coupling means being operable by said actuating/adjusting means of the closing means.

3. Filter according to claim 1 or 2, wherein said actuating/adjusting means of the closing means comprise linear slide means which are arranged on said closing means and provided with gripping means to cooperate with guide means connected to said filter.

4. Filter according to claim 3, wherein said guide means comprise cam guide means formed on a plane perpendicular to the plane of both said closing means and said filter, and parallel to the plane of movement of said linear slide means.

5. Filter according to claim 1 or 2, wherein said actuating/adjusting means of the closing means comprise rotating means which are arranged on said closing means and rotatable with respect to an axis perpendicular to the plane of said closing means to cooperate with guide means connected to said filter.

6. Filter according to claim 5, wherein said guide means comprise cam guide means formed on a cylindrical surface axially projecting from said filter.

7. Filter according to claim 5, wherein said actuating/adjusting means of the closing means comprise gripping means, support means for the closing means, guide means, and a filter-release flange provided with at least one cam suitably shaped to cooperate with means for releasing the filter from the hood.

8. Filter according to claim 7, wherein said cam is shaped substantially as an arc of circumference with a straight extension tilted towards the centre of the filter-release flange.

9. Filter according to claim 5, wherein said guide means comprise at least two cams positioned one opposite to the other and suitably shaped to act as a guide for the actuating/adjusting means of the closing means.

10. Filter according to claim 9, wherein a pin is moved along said cams to make the gripping means rotationally integral with the support means of the closing means, thus allowing the filter to be adjustably opened through a perpendicular displacement of the closing means with respect to the lying plane of said filter.

11. Filter according to claim 5, wherein means are provided for locking the rotation of the actuating/adjusting means of the closing means in the rest position.

12. Filter according to claim 11, wherein said means for locking the rotation of the actuating/adjusting means of the closing means comprise at least one actuating means movable perpendicularly to the vertical axis of symmetry of said gripping means, at least one groove, at least one through-hole, and at least one spring.

13. Filter according to claim 11, wherein said rotation locking means prevent the gripping means to rotate when the actuating means are not activated while providing and allowing for a perpendicular displacement of the gripping means with respect to the lying plane of the filter.

14. Filter according to claim 5, wherein said gripping means can be retracted into support means of the closing means, said support means of the closing means being substantially hollow cylindrical members.

15. Filter according to claim 14, wherein said gripping means are substantially cylindrical in shape and comprise at least two cams which allow said gripping means to be moved and guided perpendicularly with respect to the lying plane of the filter so as to accommodate them into the support means of the closing means.
